# EUROPÄISCHE PATENTSCHRIFT

(11) **EP 1 467 236 B1**
(45) Veröffentlichungstag und Bekanntmachung des Hinweises auf die Patenterteilung: **20.08.2014**
(21) Anmeldenummer: 03104659.2
(22) Anmeldetag: 12.12.2003
(51) Int. Cl.: G02B 21/36, G02B 21/24

(54) **Tubus zur Adaption an ein Mikroskop**
Tube for adapting to a microscope
Tube pour adaption sur un microscope

(30) Priorität: 07.01.2003 DE 10300455
(43) Veröffentlichungstag der Anmeldung: 13.10.2004
(73) Patentinhaber: Leica Microsystems CMS GmbH, 35578 Wetzlar (DE)
(72) Erfinder: HUND, Andreas, 37130, Gleichen-Reinhausen (DE); HERMANNS, Klaus, 35614, Asslar (DE); EUTENEUER, Peter, 35633, Lahnau (DE)
(74) Vertreter: Hoffmann, Jürgen

(56) Entgegenhaltungen:
- EP-A- 0 844 505
- US-A- 5 657 158
- US-A- 5 764 408
- PATENT ABSTRACTS OF JAPAN Bd. 0111, Nr. 62 (P-579), 26. Mai 1987 (1987-05-26) & JP 61 294408 A (NIPPON KOGAKU KK <NIKON>), 25. Dezember 1986 (1986-12-25)

## Beschreibung

Die vorliegende Erfindung betrifft einen Tubus zur Adaption an ein Mikroskop nach dem Oberbegriff des Anspruchs 1.

Tuben der gattungsbildenden Art sind seit geraumer Zeit aus dem Stand der Technik bekannt und werden aufgrund der Eigenschaft einer drehbar angeordneten Bedienerschnittstelle auch Ergonomietuben genannt. Unter einer Bedienerschnittstelle im Sinn der hier vorliegenden Erfindung ist der Teil des Tubus zu verstehen, der zum Einblick des Mikroskopbedieners dient. Die Bedienerschnittstelle ist drehbar angeordnet, so dass ein Mikroskopbediener z.B. den Einblickwinkel individuell auf die eigenen Bedürfnisse einstellen kann. Aufgrund der drehbar angeordneten Bedienerschnittstelle ist ein ergonomisches Arbeiten mit dem Mikroskop möglich, da der Drehwinkel benutzerspezifisch einstellbar ist und somit die Einblickhöhe des Tubus auf den jeweiligen Benutzer anpassbar ist.

Die Strahlumlenkeinrichtung lenkt einen von der Adaptionsschnittstelle kommenden Lichtstrahl in Richtung der drehbar angeordneten Strahlumlenkeinheit um, so dass hierdurch die Reihenfolge der Anordnung dieser Komponenten im Tubus festgelegt ist. So ist zwischen der Adaptionsschnittstelle und der drehbar angeordneten Strahlumlenkeinheit die Strahlumlenkeinrichtung angeordnet. Zwischen der Bedienerschnittstelle und der Strahlumlenkeinrichtung ist die drehbar angeordnete Stahlumlenkeinheit angeordnet.

Lediglich beispielhaft wird auf die EP 0 844 505 A2 verwiesen, aus der ein Tubus bekannt ist. Dieser Tubus ist insoweit nachteilig, als dort keine Möglichkeit vorgesehen ist, ein Dokumentationsgerät, beispielsweise in Form einer TV-Kamera oder einer Fotoeinrichtung, anzuschließen.
Die US 5 764 408 B2 offenbart an einer Adaptionsschnittstelle eines Mikroskop einen Tubus mit einer Dokumentationsschnittstelle sowie einer drehbar angeordneten Bedienerschnittstelle mit Okularen. Er weist eine drehbar angeordnete Strahlumlenkeinheit sowie eine Strahlumlenkeinrichtung mit einer strahlteilenden Baugruppe auf, mit welcher ein von der Adaptionsschnittstelle kommender Lichtstahl zu der Strahlumlenkeinheit umlenkbar ist. Deren Drehung ist mit der Drehung der Bedienerschnittstelle zwangsgekoppelt. Die Bedienerschnittstelle ragt dem Benutzer weit entgegen, so dass das gesamte Mikroskop große Abmessungen aufweist.

Der vorliegenden Erfindung liegt daher die Aufgabe zugrunde, einen Tubus der gattungsbildenden Art anzugeben und weiterzuentwickeln, der eine optische Dokumentationsschnittstelle bei kompakter Bauweise bereitstellt.

Der erfindungsgemäße Tubus der gattungsbildenden Art löst die voranstehende Aufgabe durch die Merkmale des Patentanspruchs 1. Danach ist ein solcher Tubus zur Adaption an ein Mikroskop dadurch gekennzeichnet, dass die Strahlumlenkeinrichtung den von der Adaptionsschnittstelle kommenden Lichtstrahl zunächst von der strahlteilenden Baugruppe zu der der Bedienerschnittstelle abgewandten Seite des Mikroskops weglenkt und dass die strahlteilende Baugruppe einen abgeteilten optischen Strahlengang zu einer Dokumentationsschnittstelle zur Verfügung stellt, welcher hinter der optischen Achse der Adaptionsschnittstelle auf der der Bedienerschnittstelle abgewandten Seite des Mikroskops verläuft.

Erfindungsgemäß ist zunächst erkannt worden, dass eine Dokumentationsschnittstelle dadurch bereitgestellt werden kann, dass eine Strahlteilung bei der Strahlumlenkeinrichtung vorgesehen ist. Eine Strahlteilung an dieser Stelle im Tubus hat nahezu keinen Einfluss auf den weiteren optischen Strahlengang der drehbar angeordneten Bedienerschnittstelle, so dass in ganz besonders vorteilhafter Weise die ergonomische Funktionalität des erfindungsgemäßen Tubus sichergestellt ist. Da im Bereich der Strahlumlenkeinrichtung der optische Strahlengang bzw. der Lichtstrahl sich nicht aufgrund einer Drehung der Bedienerschnittstelle bewegt, kann in weiter vorteilhafter Weise eine Strahlteilung mit konstruktiv einfachen Mitteln erzeugt werden, da die strahlteilende Baugruppe nicht auf einen beweglich angeordneten Strahlengang angepasst werden muss.

Durch die strahlteilende Baugruppe wird letztendlich ein abgeteilter optischer Strahlengang im Tubus zur Verfügung gestellt, der zu einer am Tubus vorgesehenen Dokumentationsschnittstelle geleitet werden kann. An diese Dokumentationsschnittstelle könnte sodann beispielsweise eine TV-Kamera oder ein Fotoapparat adaptiert werden. Somit kann in vorteilhafter Weise sowohl eine Untersuchung des Objekts durch den Einblick des Mikroskopbedieners in den Tubus erfolgen als auch eine Dokumentation eines untersuchten Objekts erfolgen, indem beispielsweise ein Objektbild mit einer an der Dokumentationsschnittstelle adaptierten TV- oder CCD-Kamera aufgenommen wird.

Üblicherweise verläuft der von einem Mikroskopobjektiv des Mikroskops kommende Lichtstrahl zum Tubus in vertikaler Richtung. Falls der Tubus auf einem aufrechten Mikroskop adaptiert ist, verläuft der vom Objekt beziehungsweise vom Mikroskopobjektiv kommende Lichtstrahl in vertikaler Richtung nach oben. Im Fall eines inversen Mikroskops verläuft der vom Objekt kommende Lichtstrahl hingegen vertikal zunächst nach unten. Der Lichtstrahl wird dann umgelenkt, so dass er vertikal nach oben zu einer Adaptionsschnittstelle verläuft. In einer konkreten Ausführungsform ist daher zunächst vorgesehen, den vom Mikroskopobjektiv bzw. von der Adaptionsschnittstelle kommende Lichtstrahl umzulenken. Hierzu umfasst die Strahlumlenkeinrichtung in einer bevorzugten Ausführungsform ein Umlenkprisma, mit dem der Lichtstrahl vorzugsweise um 90 Grad umgelenkt wird. Anstelle des Umlenkprismas könnte auch ein Spiegel vorgesehen sein. Demgemäß verläuft dann die optische Achse des umgelenkten Lichtstrahls in einer horizontalen Ebene. Vorzugsweise wird das Umlenkprisma der Strahlumlenkeinrichtung derart angeordnet, dass der umgelenkte Lichtstrahl weg vom Mikroskopbediener verläuft, also zu der dem Bediener abgewandten Seite des Mikroskops hin.

Im Konkreten umfasst die Strahlumlenkeinrichtung ein Bauernfeindprisma, in dem vorzugsweise der von der Adaptionsschnittstelle kommende Lichtstrahl zweimal reflektiert wird. Ein Bauernfeindprisma ist ein optisches Bauteil, das zwei interne Reflexionen auf geringstem Volumen realisiert. Zwei Reflexionen in einem Bauteil ist deshalb von Vorteil, weil im Tubus vorzugsweise nur eine gerade Anzahl von Reflexionen - d.h. 0, 2, 4, ... - vorgesehen sein müssen, um dem Mikroskopdiener ein ihm vertrautes - seitenrichtiges - Mikroskopbild zur Verfügung stellen zu können. Zusammen mit den Reflexionen an der drehbar angeordneten Strahlumlenkeinheit und dem Umlenkprisma ergeben sich somit vier Reflexionen. Insoweit ist hierdurch in vorteilhafter Weise eine kompakte Bauweise des erfindungsgemäßen Tubus möglich.

Das Bauernfeindprisma ist vorzugsweise zwischen dem Umlenkprisma der Strahlumlenkeinrichtung und der drehbar angeordneten Strahlumlenkeinheit angeordnet. Im Konkreten könnte so der vom Mikroskopobjektiv bzw. von der Adaptionsschnittstelle vertikal verlaufende Lichtstrahl vom Umlenkprisma um 90 Grad umgelenkt werden. Dieser umgelenkte Lichtstrahl durchläuft sodann das dem Umlenkprisma nachgeordneten Bauernfeindprisma, wobei hierbei der Lichtstrahl im Bauernfeindprisma zweimal reflektiert wird und dann zur drehbar angeordneten Strahlumlenkeinheit geleitet wird. Hierbei ist der optische Strahlengang derart konfiguriert, dass der vom Bauernfeindprisma kommende Lichtstrahl in keiner Stellung der drehbar angeordneten Strahlumlenkeinheit einen Winkel zwischen einfallendem und austretendem Strahl aufweist, der größer als 110 Grad wird.

In einer ganz besonders bevorzugten Ausführungsform ist dem Bauernfeindprisma ein optisches Bauteil zugeordnet. Mit diesem optischen Bauteil wird zumindest ein Teil des von der Adaptionsschnittstelle kommende Lichtstrahls zu einer Dokumentationsschnittstelle und/oder zu einem Detektor abgeteilt. Insoweit bildet das optische Bauteil in Verbindung mit dem Bauernfeindprisma eine strahlteilende Baugruppe. Vorzugsweise ist das optische Bauteil als Prisma ausgeführt, das an dem Bauernfeindprisma aufgekittet ist. Somit handelt es sich um eine in der Optik übliche Verbindung zwischen optischen Bauteilen, die mit relativ einfachen konstruktiven Mitteln realisiert werden kann. Durch die konkrete Ausgestaltung der optischen Verbindung des Prismas an das Bauernfeindprisma kann zugleich ein Teilungsverhältnis zwischen dem zur Dokumentationsschnittstelle abgeteilten Lichtstrahl und dem zur drehbar angeordneten Strahlumlenkeinheit geleiteten Lichtstrahl eingestellt werden. So könnte beispielsweise ein Teilungsverhältnis von 1:1 realisiert werden. Dies wird im Konkreten dadurch sichergestellt, dass vor dem Aufkittvorgang auf das Bauernfeindprisma an der späteren Verbindungsstelle eine entsprechende Interferenzbeschichtung aufgebracht wird.

Vorzugsweise sind die einzelnen Komponenten der Strahlumlenkeinrichtung in Form von Prismen ausgebildet, also aus Glas bestehend. In einer bevorzugten Ausführungsform ist vorgesehen, die optischen Eigenschaften der Strahlumlenkeinrichtung derart zu wählen, dass hierdurch die Länge des optischen Wegs des Strahlengangs im Tubus anpassbar ist. Hierdurch kann ein kleinerer optischer Weg zwischen den anderen optischen Bauteilen im Tubus erreicht werden, was in besonders vorteilhafter Weise eine noch kompaktere Bauweise ermöglicht.

Bei manchen Applikationen ist es erforderlich, das gesamte, vom Objekt kommende Licht zum Auge des Mikroskopbedieners zu leiten. Andererseits kann es ebenfalls erforderlich sein, das gesamte, vom Objekt kommende Licht einer Dokumentationsschnittstelle bzw. einer CCD-Kamera zuzuleiten, insbesondere für Applikationen geringer Objektlichtintensität, z.B. die Fluoreszenzmikroskopie. Für diese Fälle ist in einer konkreten Ausführungsform vorgesehen, dass die Strahlteilereinrichtung oder zumindest eine Baugruppe der Strahlteilereinrichtung aus ihrer Wirkstellung verbringbar ist.

Falls die Strahlteilereinrichtung - also beispielsweise das Bauernfeindprisma und das dem Bauernfeindprisma zugeordnete optische Bauteil - aus seiner Wirkstellung verbracht wird, wird an dessen Stelle ein anderes optisches Bauteil oder ein Umlenkelement eingebracht, das den Lichtstrahl entweder zur Dokumentationsschnittstelle oder zur Bedienerschnittstelle des Tubus leitet. Vorzugsweise wird die gesamte Strahlteilereinrichtung - also beispielsweise das Bauernfeindprisma und das dem Bauernfeindprisma zugeordnete optische Bauteil - aus ihrer Wirkstellung verbracht und stattdessen ein anderes optisches Bauteil aus Glas - beispielsweise ein Glasblock - gebracht, das den von der Adaptionsschnittstelle kommende Lichtstrahl zur Dokumentationsschnittstelle leitet. Hierbei ist das andere optische Bauteil derart ausgebildet, dass der vom Lichtstrahl darin zurückgelegte optische Weg im Wesentlichen dem optischen Weg entspricht, den der Lichtstrahl in der gesamten Strahlteilereinrichtung zurücklegt.

Im Konkreten besteht die Strahlteilereinrichtung aus einem Bauernfeindprisma und einem dem Bauernfeindprisma aufgekittetes Prisma, wobei die gemeinsame Fläche des Bauernfeindprismas und des Prismas mit einer Beschichtung versehen ist, die ein Teilungsverhältnis von 1:1 realisiert. Die Strahlteilereinrichtung ist in einer Richtung senkrecht zur optischen Achse verschiebbar angeordnet und kann aus dem Strahlengang entfernt werden, beispielsweise von einer Magazinführung geführt. In einer ersten Stellung befindet sich die Strahlteilereinrichtung im Strahlengang, so dass 50% des Lichts zur Bedienerschnittstelle und 50% des Lichts zur Dokumentationsschnittstelle geleitet wird. In einer zweiten Stellung wird die Strahlteilereinrichtung aus dem Strahlengang entfernt und statt dessen ein Bauernfeindprisma in den Strahlengang eingebracht, das an einer Seite derart spiegelnd beschichtet ist, dass das gesamte von der Adaptionsschnittstelle kommende Licht im Bauernfeindprisma zweimal reflektiert und zur Bedienerschnittstelle umgelenkt wird. In einer dritten Stellung wird ein Bauernfeindprisma und ein Prisma in den Strahlengang eingebracht, wobei die gemeinsame Fläche des Bauernfeindprismas und des Prismas derart mit einer Beschichtung ausgebildet ist, dass der gesamte Lichtstrahl ohne Reflexion die beiden Bauteile passiert und zur Dokumentationsschnittstelle geleitet wird.

Der Zustand, bei dem ein Teil des Lichtstrahls in Richtung der Dokumentationsschnittstelle und der andere Teil des Lichtstrahls in Richtung der Bedienerschnittstelle abgeteilt wird, wird durch das Einbringen der Strahlteilereinrichtung oder zumindest einer Baugruppe der Strahlteilereinrichtung in ihre Wirkstellung wieder hergestellt. Im Konkreten könnte das Verbringen der Strahlteilereinrichtung in und aus der Wirkstellung durch einen Magazinschieber erfolgen, der beispielsweise bei klassischen Mikroskoptuben eingesetzt wird, die keine drehbar angeordnete Bedienerschnittstelle aufweisen.

In einer besonders bevorzugten Ausführungsform ist die Bedienerschnittstelle und die drehbar angeordnete Strahlumlenkeinheit um eine Drehachse drehbar. Die Drehachse ist senkrecht zur optischen Achse des im Tubus verlaufenden Lichtstrahls angeordnet. Aufgrund der Zwangskopplung der Drehung der Bedienerschnittstelle mit der Drehung der drehbar angeordneten Strahlumlenkeinheit wird bei einer Drehung der Bedienerschnittstelle der zwischen der drehbar angeordneten Strahlumlenkeinheit und Bedienerschnittstelle verlaufende Lichtstrahl ebenfalls gedreht bzw. geschwenkt. Andererseits ist der von der Adaptionsschnittstelle kommende und zur drehbar angeordneten Strahlumlenkeinheit verlaufende Lichtstrahl ortsfest. Die optischen Achsen der im Tubus verlaufenden Lichtstrahlen liegen üblicherweise allesamt in einer Ebene, so dass die Drehachse der Bedienerschnittstelle und der drehbar angeordneten Strahlumlenkeinheit senkrecht zu dieser Ebene angeordnet ist. Im Konkreten liegt die Drehachse an der Stelle, an der die optische Achse des von der Adaptionsschnittstelle kommenden und zur drehbar angeordneten Bedienerschnittstelle verlaufenden Lichtstrahls auf die drehbar angeordnete Strahlumlenkeinheit trifft. Grundsätzlich ist die drehbar angeordnete Strahlumlenkeinheit in Form eines Spiegels ausgebildet. Dann liegt die Drehachse in der Spiegeloberfläche und zwar dort, wo die optische Achse des von der Adaptionsschnittstelle zum Spiegel verlaufenden Lichtstrahls auf den Spiegel auftrifft.

Im Konkreten ist vorgesehen, dass bei einer Drehung der Bedienerschnittstelle um einen vorgebbaren Winkel eine Drehung der drehbar angeordneten Strahlumlenkeinheit um den halben Winkel erfolgt. Mit anderen Worten wird beispielsweise die drehbar angeordnete Strahlumlenkeinheit um 22,5 Grad gedreht, wenn die Bedienerschnittstelle um 45 Grad gedreht wird. Diese Zwangskopplung zwischen Bedienerschnittstelle und drehbar angeordneter Strahlumlenkeinheit könnte beispielsweise mit einem Getriebe- oder Zahnradsystem erzielt werden, dass ein entsprechendes Untersetzungsverhältnis aufweist.

Der von einem Mikroskopobjektiv des Mikroskops kommende Lichtstrahl weist üblicherweise die Form eines sogenannten Unendlich-Strahls auf. Hierbei handelt es sich um eine im Wesentlichen kollimierte Strahlform, die jedoch leicht divergiert. Die leichte Divergenz ist darauf zurückzuführen, dass das von jedem Objektpunkt ausgehende Licht durch das Mikroskopobjektiv in einen kollimierten Einzellichtstrahl umgewandelt wird. Da dies für jeden Objektpunkt in der Objektebene des Mikroskopobjektivs gilt, ergeben sich über die gesamte Mikroskopobjektivpupille hinweg kollimierte Einzellichtstrahlen, die in ihrer Ausbreitungsrichtung relativ zueinander und - insbesondere für im Feld verlaufende Einzellichtstrahlen - bezüglich zur optischen Achse leicht divergieren. Mit zunehmender Entfernung von dem Mikroskopobjektiv wird der Strahldurchmesser aufgrund dieser Strahldivergenz stets größer, so dass bei im Wesentlichen unveränderter Strahlform eine kompakte Bauweise des Tubus nicht möglich wäre. Im Folgenden wird mit Lichtstrahl die Gesamtheit sämtlicher von der Mikroskopobjektivpupille verlaufenden Einzellichtstrahlen bezeichnet.

Daher ist in einer konkreten Ausführungsform zwischen der Adaptionsschnittstelle und der Strahlumlenkeinrichtung eine Linseneinrichtung mit positiver Brechkraft vorgesehen, die vorzugsweise einen im Wesentlichen kollimierten Lichtstrahl in einen konvergierenden Lichtstrahl umwandelt. Hierdurch weist der im Tubus verlaufende Lichtstrahl jedenfalls keine Divergenz mehr auf bzw. die am äußeren Rand verlaufenden Einzellichtstrahlen weisen gerade keine Divergenz mehr auf, so dass in vorteilhafter Weise eine kompakte Bauweise des Tubus erzielbar ist. Die Brechkraft der Linseneinrichtung ist demgemäß zumindest derart gewählt, dass der im Tubus verlaufende Lichtstrahl gerade nicht mehr divergiert.

Der erfindungsgemäße Tubus ist vorzugsweise derart ausgestaltet, dass der Abstand von der Drehachse zur Bedienerschnittstelle einen Wert aufweist, bei dem eine Drehung der Bedienerschnittstelle eine ergonomische Einstellung des Tubus ermöglicht. Dieser Wert beträgt üblicherweise 20 bis 40 Zentimeter. Zwischen der drehbar angeordneten Strahlumlenkeinheit und der Bedienerschnittstelle ist eine drehbar angeordnete weitere Linseneinrichtung vorgesehen, die eine Linse mit negativer Brechkraft und eine Linse mit positiver Brechkraft umfasst. Die Linse mit negativer Brechkraft ist hierbei derart bemessen, dass sie den von der Strahlumlenkeinrichtung kommenden Lichtstrahl im Wesentlichen kollimiert, also in einen Unendlich-Strahl umwandelt.

In einer ganz besonders bevorzugten Ausführungsform ist aufgrund des zwischen den beiden Linsen der weiteren Linseneinrichtung verlaufenden Unendlich-Strahlengangs eine Baugruppe des Tubus teleskopierbar bzw. ausziehbar. Die teleskopierbare Baugruppe umfasst die Linse mit positiver Brechkraft und die Bedienerschnittstelle. Somit wird durch das Ausziehen bzw. das Einschieben der Baugruppe der Abstand der beiden Linsen der weiteren Linseneinrichtung variiert.

Vorzugsweise ist die Baugruppe in Richtung der optischen Achse des in der Baugruppe verlaufenden Lichtstrahls teleskopierbar. Zusätzliche, den Lichtstrahl umlenkende Elemente sind somit nicht erforderlich. Aufgrund der teleskopierbaren Baugruppe in Verbindung mit der drehbar angeordneten Bedienerschnittstelle ist der erfindungsgemäße Tubus in ganz besonders vorteilhafter Weise individuell auf die Bedürfnisse eines Bedieners einstellbar, wobei ein Teil des vom Mikroskop kommenden Lichtstrahls in Richtung der Dokumentationsschnittstelle geleitet wird.

Wie bereits angedeutet, ist die Bedienerschnittstelle in Form eines Binokularteils zum Okulareinblick durch einen Bediener ausgeführt. Hierbei können die beiden Okulare in üblicher Weise in ihrem Abstand zueinander variiert werden, so dass die Okulare zum Okulareinblick auf den Augenabstand des Bedieners angepasst werden können. Dies könnte beispielsweise nach dem Siedentopfprinzip erfolgen, das aus dem Stand der Technik bekannt ist.

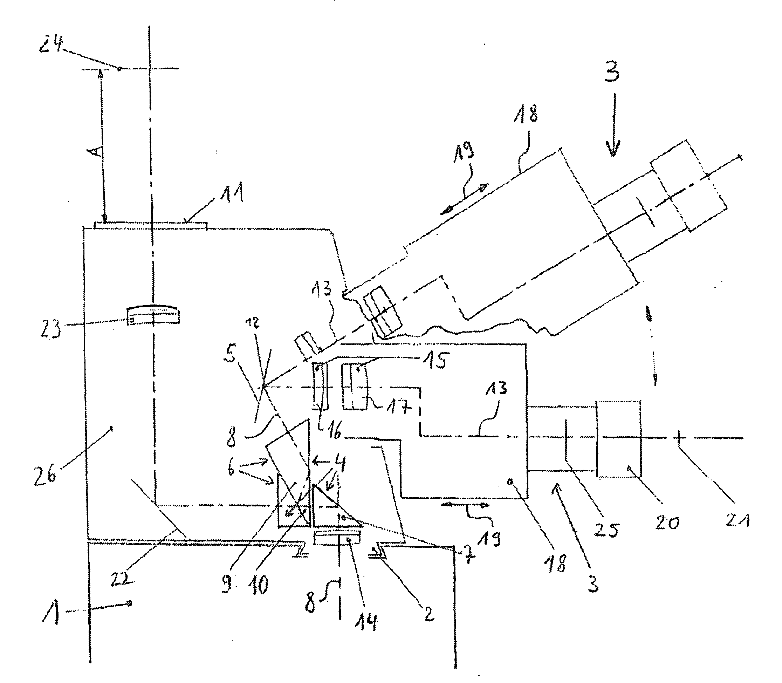

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige
- Fig.: eine schematische Darstellung eines Ausführungsbeispiels eines erfindungsgemäßen Tubus in einer seitlichen Schnittbildansicht.

Der in der einzigen Fig. gezeigte Tubus 26 ist zur Adaption an ein lediglich zum Teil gezeigten Mikroskop 1 vorgesehen. Somit ist der in der einzigen Fig. gezeigte Tubus grundsätzlich auf die Tubuswechslung eines inversen oder aufrechten Mikroskops aufsetzbar. Zur Adaption an das Mikroskop 1 weist der Tubus 26 eine Adaptionsschnittstelle 2 auf. Weiterhin umfasst der Tubus eine drehbar angeordnete Bedienerschnittstelle 3, die in zwei unterschiedlichen Drehpositionen gezeigt bzw. angedeutet ist. Weiterhin umfasst der Tubus eine Strahlumlenkeinrichtung 4, die ein von der Adaptionsschnittstelle 2 kommenden Lichtstrahl in Richtung einer drehbar angeordneten Strahlumlenkeinheit 5 umlenkt. Eine Drehung der Bedienerschnittstelle 3 ist mit einer Drehung der drehbar angeordneten Strahlumlenkeinheit 5 zwangsgekoppelt.

Die Strahlumlenkeinrichtung 4 weist eine strahlteilende Baugruppe 6 auf.

Die Strahlumlenkeinrichtung 4 umfasst ein Umlenkprisma 7, mit dem zunächst der von der Adaptionsschnittstelle 2 kommende Lichtstrahl um 90 Grad umgelenkt wird. Von diesem Lichtstrahl ist lediglich die optische Achse 8 gestrichelt gezeigt. Weiterhin umfasst die Strahlumlenkeinrichtung 4 ein Bauernfeindprisma 9, in dem der von der Adaptionsschnittstelle 2 kommende Lichtstrahl zweimal reflektiert wird.

Das Bauernfeindprisma 9 ist zwischen dem Umlenkprisma 7 und der drehbar angeordneten Strahlumlenkeinheit 5 angeordnet. Dem Bauernfeindprisma 9 ist ein optisches Bauteil 10 zugeordnet, mit dem zumindest ein Teil des von der Adaptionsschnittstelle 2 kommenden Lichtstrahls zu einer Dokumentationsschnittstelle 11 abteilbar ist. Das optische Bauteil 10 ist hierbei als Prisma ausgeführt, das an dem Bauernfeindprisma 9 aufgekittet ist.

Die drehbar angeordnete Bedienerschnittstelle 3 und die drehbar angeordnete Strahlumlenkeinheit 5 sind um eine gemeinsame Drehachse 12 drehbar. Die Drehachse 12 ist senkrecht zur optischen Achse 8 des von der Adaptionsschnittstelle kommenden Lichtstrahls angeordnet. Weiterhin ist die Drehachse 12 senkrecht zur optischen Achse 13 des zwischen der drehbar angeordneten Strahlumlenkeinheit und der drehbar angeordneten Bedienerschnittstelle 3 verlaufenden Lichtstrahls angeordnet, in dieser Darstellung also senkrecht zur Zeichenebene.

In der einzigen Fig. ist die Bedienerschnittstelle 3 in zwei unterschiedlichen Winkelpositionen gezeigt. In der einen Position ist der größte Teil der optischen Achse 13 horizontal angeordnet. Somit befindet sich die Bedienerschnittstelle 3 in einem Drehwinkel von 0 Grad. Die zweite Darstellung der Bedienerschnittstelle ist um 30 Grad um die Drehachse 12 gedreht gezeigt, wobei die Winkelstellung der drehbar angeordneten Strahlumlenkeinheit 5 der zweiten Drehstellung der Bedienerschnittstelle 3 entspricht. Insoweit erfolgt bei einer Drehung der Bedienerschnittstelle um 30 Grad eine Drehung der drehbar angeordneten Strahlumlenkeinheit um 15 Grad in gleicher Drehrichtung.

Zwischen der Adaptionsschnittstelle 2 und der Strahlumlenkeinrichtung 4 ist eine Linseneinrichtung 14 mit positiver Brechkraft vorgesehen. Die Linseneinrichtung 14 wandelt den im Wesentlichen kollimierten jedoch leicht divergierenden Lichtstrahl, der vom Mikroskop durch die Adaptionsschnittstelle 2 hindurchtritt - ein sogenannter Unendlich-Strahl - in einen konvergierenden Lichtstrahl um. Insoweit können die der Linseneinrichtung 14 nachgeordneten optischen Bauteile kleiner dimensioniert werden, was eine kompakte Bauweise des erfindungsgemäßen Tubus 26 ermöglicht.

Zwischen der Strahlumlenkeinrichtung 4 und der Bedienerschnittstelle 3 ist eine drehbar angeordnete weitere Linseneinrichtung 15 vorgesehen. Diese weitere Linseneinrichtung 15 umfasst eine Linse 16 mit negativer Brechkraft und eine Linse 17 mit positiver Brechkraft. Zwischen der Linse 16 mit negativer Brechkraft und der Linse 17 mit positiver Brechkraft liegt ein sogenannter Unendlich-Strahlengang vor. In der drehbar angeordneten Bedienerschnittstelle 3 wird durch die Linse 17 mit positiver Brechkraft ebenfalls ein Zwischenbild 25 erzeugt.

Der in der einzigen Fig. gezeigte Tubus 26 umfasst eine Baugruppe 18, der zusammen mit der Linse 17 mit positiver Brechkraft und der Bedienerschnittstelle 3 teleskopierbar angeordnet ist. Die Baugruppe 18 ist in Richtung der optischen Achse 13 des in der Baugruppe verlaufenden Lichtstrahls teleskopierbar. Diese Richtung ist anhand der Doppelpfeile 19 gezeigt.

Die in der Winkelstellung von 30 Grad gezeigte Bedienerschnittstelle 3 ist verglichen zur Bedienerschnittstelle 3, die in der 0 Grad-Stellung gezeigt ist, in einem ausgezogenen Zustand gezeigt. Dies wird durch den vergrößerten Abstand der beiden Linsen 16, 17 in der 30 Grad-Winkeleinstellung ersichtlich. Der Abstand der beiden Linsen 16, 17 in 0 Grad-Winkeleinstellung ist hingegen geringer. In dem in der einzigen Fig. gezeigten Ausführungsbeispiel ist die teleskopierbare Baugruppe um maximal 30 mm ausziehbar.

Die Bedienerschnittstelle 3 ist in Form eines Binokularteils zum Okulareinblick durch einen Bediener ausgeführt, wobei - aufgrund der Seitenansicht des in der einzigen Fig. gezeigten Tubus 26 - lediglich ein Okular 20 gezeigt ist. Die Austrittspupille des Okulars 20 ist mit dem Bezugszeichen 21 gekennzeichnet.

Der Teil des Lichts, der das Bauernfeindprisma 9 ohne Ablenkung durch das optische Bauteil 10 durchläuft, wird durch das Umlenkelement 22 um 90 Grad umgelenkt und passiert die Linsengruppe 23 mit positiver Brechkraft, die ein Zwischenbild 24 erzeugt. Im Abstand A von dem Zwischenbild 24 befindet sich die Dokumentationsschnittstelle 11, auf die TV-Adapter und Kamera-Adapter aufgesetzt werden können.

Abschließend sei ganz besonders darauf hingewiesen, dass das voranstehend erörterte Ausführungsbeispiel lediglich zur Beschreibung der beanspruchten Lehre dient, diese jedoch nicht auf das Ausführungsbeispiel einschränken.

### Bezugszeichenliste

- 1: Mikroskop
- 2: Adaptionsschnittstelle
- 3: drehbar angeordnete Bedienerschnittstelle
- 4: Strahlumlenkeinrichtung
- 5: drehbar angeordnete Strahlumlenkeinheit
- 6: strahlteilende Baugruppe
- 7: Umlenkprisma
- 8: optische Achse des von (2) kommende Lichtstrahls
- 9: Bauernfeindprisma
- 10: optisches Bauteil
- 11: Dokumentationsschnittstelle
- 12: Drehachse von (3) und (5)
- 13: optische Achse des zwischen (5) und (3) verlaufenden Lichtstrahls
- 14: Linseneinrichtung
- 15: weitere Linseneinrichtung
- 16: Linse von (15) mit negativer Brechkraft
- 17: Linse von (15) mit positiver Brechkraft
- 18: teleskopierbare Baugruppe
- 19: Richtung, entlang derer (18) teleskopierbar angeordnet ist
- 20: Okular
- 21: Austrittspupille des Okulars von (3)
- 22: Umlenkelement
- 23: Linsengruppe mit positiver Brechkraft
- 24: Zwischenbild
- 25: Zwischenbild in (3)
- 26: Tubus

## Patentansprüche

1. Tubus zur Adaption an ein Mikroskop, mit einer Adaptionsschnittstelle (2), einer drehbar angeordneten Bedienerschnittstelle (3), einer Strahlumlenkeinrichtung (4) und einer drehbar angeordneten Strahlumlenkeinheit (5), wobei die Strahlumlenkeinrichtung (4) eine strahlteilende Baugruppe (6) aufweist und wobei mit der Strahlumlenkeinrichtung (4) ein von der Adaptionsschnittstelle (2) kommender Lichtstahl in Richtung der drehbar angeordneten Strahlumlenkeinheit (5) umlenkbar ist, wobei eine Drehung der Bedienerschnittstelle (3) mit einer Drehung der drehbar angeordneten Strahlumlenkeinheit (5) zwangsgekoppelt ist,
**dadurch gekennzeichnet, dass** die Strahlumlenkeinrichtung (4) den von der Adaptionsschnittstelle (2) kommenden Lichtstrahl zunächst vor der strahlteilenden Baugruppe (6) zu der der Bedienerschnittstelle (3) abgewandten Seite des Mikroskops weglenkt und dass die strahlteilende Baugruppe (6) einen abgeteilten optischen Strahlengang zu einer Dokumentationsschnittstelle zur Verfügung stellt, welcher hinter der optischen Achse (8) der Adaptionsschnittstelle (2) auf der der Bedienerschnittstelle (3) abgewandten Seite des Mikroskops verläuft.

2. Tubus nach Anspruch 1, **dadurch gekennzeichnet, dass** die Strahlumlenkeinrichtung (4) ein Umlenkprisma (7) umfasst, mit dem vorzugsweise der von der Adaptionsschnittstelle (2) kommende Lichtstrahl um 90 Grad umlenkbar ist.

3. Tubus nach Anspruch 1 oder 2, **dadurch gekennzeichnet, dass** die Strahlumlenkeinrichtung (4) ein Bauernfeindprisma (9) umfasst, in dem vorzugsweise der von der Adaptionsschnittstelle (2) kommende Lichtstrahl zweimal reflektiert wird.

4. Tubus nach Anspruch 2 und 3, **dadurch gekennzeichnet, dass** das Bauernfeindprisma (9) zwischen dem Umlenkprisma (7) und der drehbar angeordneten Strahlumlenkeinheit (5) angeordnet ist.

5. Tubus nach Anspruch 4, **dadurch gekennzeichnet, dass** dem Bauernfeindprisma (9) ein optisches Bauteil (10) zugeordnet ist, mit dem zumindest ein Teil des von der Adaptionsschnittstelle (2) kommenden Lichtstrahls zu einer Dokumentationsschnittstelle (11) und/oder zu einem Detektor abteilbar ist.

6. Tubus nach Anspruch 5, **dadurch gekennzeichnet, dass** das optische Bauteil (10) als Prisma ausgeführt ist, das an dem Bauernfeindprisma (9) aufgekittet ist.

7. Tubus nach einem der Ansprüche 1 bis 6, **dadurch gekennzeichnet, dass** die optischen Eigenschaften der Strahlumlenkeinrichtung (4) derart wählbar sind, dass hierdurch die Länge des optischen Wegs des Strahlengangs im Tubus anpassbar ist.

8. Tubus nach einem der Ansprüche 1 bis 7, **dadurch gekennzeichnet, dass** die Strahlteilereinrichtung (4) oder zumindest eine Baugruppe der Strahlteilereinrichtung (4) in ihre Wirkstellung und aus ihrer Wirkstellung verbringbar ist, vorzugsweise durch einen Magazinschieber geführt.

9. Tubus nach einem der Ansprüche 1 bis 8, **dadurch gekennzeichnet, dass** die Bedienerschnittstelle (3) und die drehbar angeordnete Strahlumlenkeinheit (5) um eine senkrecht zur optischen Achse (8, 13) des im Tubus (26) verlaufenden Lichtstrahls angeordneten Drehachse (12) drehbar sind.

10. Tubus nach einem der Ansprüche 1 bis 9, **dadurch gekennzeichnet, dass** bei einer Drehung der Bedienerschnittstelle (3) um einen vorgebbaren Winkel eine Drehung der drehbar angeordneten Strahlumlenkeinheit (5) um den halben Winkel erfolgt.

11. Tubus nach einem der Ansprüche 1 bis 10, **dadurch gekennzeichnet, dass** zwischen der Adaptionsschnittstelle (2) und der Strahlumlenkeinrichtung (4) eine Linseneinrichtung (14) mit positiver Brechkraft vorgesehen ist, die vorzugsweise einen im Wesentlichen kollimierten Lichtstrahl in einen konvergierenden Lichtstrahl umwandelt.

12. Tubus nach einem der Ansprüche 1 bis 11, **dadurch gekennzeichnet, dass** zwischen der drehbar angeordneten Strahlumlenkeinheit (5) und der Bedienerschnittstelle (3) eine drehbar angeordnete weitere Linseneinrichtung (15) vorgesehen ist, die eine Linse (16) mit negativer Brechkraft und eine Linse (17) mit positiver Brechkraft aufweist.

13. Tubus nach Anspruch 12, **dadurch gekennzeichnet, dass** die Linse (16) mit negativer Brechkraft den von der drehbar angeordneten Strahlumlenkeinheit (5) kommenden Lichtstrahl im Wesentlichen kollimiert.

14. Tubus nach Anspruch 13, **gekennzeichnet durch** eine teleskopierbare Baugruppe (18), die die Linse (17) mit positiver Brechkraft und die Bedienerschnittstelle (3) umfasst, wobei die Baugruppe (18), vorzugsweise in Richtung der optischen Achse (13) des in der Baugruppe (18) verlaufenden Lichtstrahls, teleskopierbar ist.

15. Tubus nach einem der Ansprüche 1 bis 14, **dadurch gekennzeichnet, dass** die Bedienerschnittstelle (3) in Form eines Binokularteils zum Okulareinblick durch einen Bediener ausgeführt ist.

## Claims

1. Tube for adapting to a microscope, comprising an adaptation interface (2), a rotatably arranged operator interface (3), a beam deflection device (4) and a rotatably arranged beam deflection unit (5), the beam deflection device (4) having a beam-splitting module (6), and the beam deflection device (4) being capable of deflecting a light beam coming from the adaptation interface (2) in the direction of the rotatably arranged beam deflection unit (5), a rotation of the operator interface (3) being positively coupled to a rotation of the rotatably arranged beam deflection unit (5), **characterized in that** the beam deflection device (4) initially deflects the light beam coming from the adaptation interface (2) upstream of the beam-splitting module (6) to the side of the microscope averted from the operator interface (3), and **in that** the beam-splitting module (6) makes available to a documentation interface a separated optical beam path which runs behind the optical axis (8) of the adaptation interface (2) on the side of the microscope averted from the operator interface (3).

2. Tube according to Claim 1, **characterized in that** the beam deflection device (4) comprises a deflection prism (7) which can preferably be used to deflect the light beam coming from the adaptation interface (2) by 90 degrees.

3. Tube according to Claim 1 or 2, **characterized in that** the beam deflection device (4) comprises a Bauernfeind prism (9) in which the light beam coming from the adaptation interface (2) is preferably reflected twice.

4. Tube according to Claims 2 and 3, **characterized in that** the Bauernfeind prism (9) is arranged between the deflection prism (7) and the rotatably arranged beam deflection unit (5).

5. Tube according to Claim 4, **characterized in that** assigned to the Bauernfeind prism (9) is an optical component (10) which can be used to separate at least a portion of the light beam coming from the adaptation interface (2) to a documentation interface (11) and/or to a detector.

6. Tube according to Claim 5, **characterized in that** the optical component (10) is designed as a prism which is cemented on the Bauernfeind prism (9).

7. Tube according to one of Claims 1 to 6, **characterized in that** the optical properties of the beam deflection device (4) are selected in such a way that the length of the optical path of the beam path in the tube can be adapted thereby.

8. Tube according to one of Claims 1 to 7, **characterized in that** the beam-splitting device (4) or at least a module of the beam-splitting device (4) can be brought into its working position and out of its working position, preferably by a magazine slide.

9. Tube according to one of Claims 1 to 8, **characterized in that** the operator interface (3) and the rotatably arranged beam deflection unit (5) are rotatable about a rotation axis (12) arranged perpendicular to the optical axis (8, 13) of the light beam running in the tube (26).

10. Tube according to one of Claims 1 to 9, **characterized in that** upon rotation of the operator interface (3) by a prescribable angle, there is a rotation of the rotatably arranged beam deflection unit (5) by half the angle.

11. Tube according to one of Claims 1 to 10, **characterized in that** provided between the adaptation interface (2) and the beam deflection device (4) is a lens device (14) of positive refractive power which preferably converts a substantially collimated light beam into a converging light beam.

12. Tube according to one of Claims 1 to 11, **characterized in that** provided between the rotatably arranged beam deflection unit (5) and the operator interface (3) is a further, rotatably arranged, lens device (15) which has a lens (16) of negative refractive power and a lens (17) of positive refractive power.

13. Tube according to Claim 12, **characterized in that** the lens (16) of negative refractive power substantially collimates the light beam coming from the rotatably arranged beam deflection unit (5).

14. Tube according to Claim 13, **characterized by** a telescopically adjustable module (18) which surrounds the lens (17) of positive refractive power and the operator device (3), the module (18) being telescopically adjustable, preferably in the direction of the optical axis (13) of the light beam running in the module (18).

15. Tube according to one of Claims 1 to 14, **characterized in that** the operator interface (3) is designed in the form of a binocular part for viewing into the eyepiece by an operator.

## Revendications

1. Tube destiné à être adapté sur un microscope, comprenant une interface d'adaptation (2), une interface d'opérateur (3) montée de manière rotative, un dispositif de renvoi de rayon (4) et une unité de renvoi de rayon (5) montée de manière rotative, le dispositif de renvoi de rayon (4) présentant un sous-ensemble séparateur de rayon (6) et un rayon lumineux en provenance de l'interface d'adaptation (2) pouvant être renvoyé avec le dispositif de renvoi de rayon (4) en direction de l'unité de renvoi de rayon (5) montée de manière rotative, une rotation de l'interface d'opérateur (3) étant couplée de force avec une rotation de l'unité de renvoi de rayon (5) montée de manière rotative,
**caractérisé en ce que** le dispositif de renvoi de rayon (4) dévie le rayon lumineux en provenance de l'interface d'adaptation (2) tout d'abord avant le sous-ensemble séparateur de rayon (6) vers le côté du microscope à l'opposé de l'interface d'opérateur (3) et **en ce que** le sous-ensemble séparateur de rayon (6) met à disposition un trajet de rayon optique divisé vers une interface de documentation qui s'étend derrière l'axe optique (8) de l'interface d'adaptation (2) sur le côté du microscope à l'opposé de l'interface d'opérateur (3).

2. Tube selon la revendication 1, **caractérisé en ce que** le dispositif de renvoi de rayon (4) comprend un prisme de renvoi (7) avec lequel le rayon lumineux de préférence en provenance de l'interface d'adaptation (2) peut être renvoyé de 90 degrés.

3. Tube selon la revendication 1 ou 2, **caractérisé en ce que** le dispositif de renvoi de rayon (4) comprend un prisme de Bauernfeind (9) dans lequel le rayon lumineux de préférence en provenance de l'interface d'adaptation (2) peut être réfléchi deux fois.

4. Tube selon les revendications 2 et 3, **caractérisé en ce que** le prisme de Bauernfeind (9) est disposé entre le prisme de renvoi (7) et l'unité de renvoi de rayon (5) montée de manière rotative.

5. Tube selon la revendication 4, **caractérisé en ce qu'**un composant optique (10) est associé au prisme de Bauernfeind (9), avec lequel au moins une partie du rayon lumineux en provenance de l'interface d'adaptation (2) peut être divisée vers une interface de documentation (11) et/ou vers un détecteur.

6. Tube selon la revendication 5, **caractérisé en ce que** le composant optique (10) est réalisé sous la forme d'un prisme qui est fixé par masticage sur le prisme de Bauernfeind (9).

7. Tube selon l'une des revendications 1 à 6, **caractérisé en ce que** les caractéristiques optiques du dispositif de renvoi de rayon (4) peuvent être choisies de telle sorte qu'elles permettent d'adapter la longueur du chemin optique du trajet de rayon dans le tube.

8. Tube selon l'une des revendications 1 à 7, **caractérisé en ce que** le dispositif de renvoi de rayon (4) ou au moins un sous-ensemble du dispositif de renvoi de rayon (4) peut être amené dans sa position active et hors de sa position active, de préférence en étant guidé par un curseur de chargeur.

9. Tube selon l'une des revendications 1 à 8, **caractérisé en ce que** l'interface d'opérateur (3) et l'unité de renvoi de rayon (5) montée de manière rotative peuvent effectuer une rotation autour d'un axe de rotation (12) disposé perpendiculairement à l'axe optique (8, 13) du rayon lumineux qui se propage dans le tube (26).

10. Tube selon l'une des revendications 1 à 9, **caractérisé en ce que** lors d'une rotation de l'interface d'opérateur (3) d'un angle pouvant être prédéfini, il se produit une rotation de l'unité de renvoi de rayon (5) montée de manière rotative de la moitié de l'angle.

11. Tube selon l'une des revendications 1 à 10, **caractérisé en ce qu'**entre l'interface d'adaptation (2) et le dispositif de renvoi de rayon (4) est prévu un dispositif à lentille (14) ayant un indice de réfraction positif, lequel convertit de préférence un rayon lumineux essentiellement collimaté en un rayon lumineux convergent.

12. Tube selon l'une des revendications 1 à 11, **caractérisé en ce qu'**entre l'unité de renvoi de rayon (5) montée de manière rotative et l'interface d'opérateur (3) est prévu un dispositif à lentille (15) supplémentaire monté de manière rotative, lequel présente une lentille (16) ayant un indice de réfraction négatif et une lentille (17) ayant un indice de réfraction positif.

13. Tube selon la revendication 12, **caractérisé en ce que** la lentille (16) ayant un indice de réfraction négatif collimate pour l'essentiel le rayon lumineux en provenance de l'unité de renvoi de rayon (5) montée de manière rotative.

14. Tube selon la revendication 13, **caractérisé par** un sous-ensemble télescopique (18) qui comprend la lentille (17) ayant un indice de réfraction positif et l'interface d'opérateur (3), le sous-ensemble (18) pouvant être télescopé de préférence dans la direction de l'axe optique (13) du rayon lumineux qui se propage dans le sous-ensemble (18).

15. Tube selon l'une des revendications 1 à 14, **caractérisé en ce que** l'interface d'opérateur (3) est réalisée sous la forme d'une pièce binoculaire pour l'observation à travers l'oculaire par un opérateur.
